# EUROPEAN PATENT APPLICATION

(11) **EP 4 039 944 A1**
(43) Date of publication of application: **10.08.2022**
(21) Application number: 22152581.9
(22) Date of filing: 20.01.2022
(51) Int. Cl.: F01D 21/06, F01D 25/28, B64F 1/00, F02C 7/12, F01D 25/12

(54) **POST-SHUTDOWN ENGINE HEAT REMOVAL SYSTEM**

(30) Priority: 05.02.2021 US 202117168663
(71) Applicant: General Electric Company, Schenectady, NY 12345 (US)
(72) Inventor: MILLHAEM, Michael Robert, West Chester, 45069 (US); PRITCHARD, JR, Byron Andrew, Evendale, 45215 (US); ERIKSEN, Michael Edward, West Chester, 45069 (US)
(74) Representative: Openshaw & Co.

(57) **Abstract**

Systems and methods for removing heat are provided. For example, a system comprises a support apparatus and a cooling apparatus, including a suction device for forcing air through a gas turbine engine, disposed on the support apparatus, which is moveable with respect to the engine to position the cooling apparatus in contact with an engine exhaust. A nozzle in operative communication with the suction device may force air through the engine. Further, the support apparatus may comprise a lift device, an angle adjustment mechanism, and a nozzle support element disposed on a longitudinal slide rail for adjusting a height, an angle, and a longitudinal position of the nozzle. A method of removing heat from a gas turbine engine after shutdown comprises positioning a cooling apparatus adjacent an exhaust; sealing the cooling apparatus to the exhaust; and operating a suction device of the cooling apparatus to move air through the engine.

## Description

### FIELD

The present subject matter relates generally to heat removal systems and methods of cooling turbomachinery after shutdown.

### BACKGROUND

Upon engine shutdown, a typical gas turbine engine requires a period of time to return to ambient or near ambient temperature. A device, system, and/or method for assisting cooldown of a gas turbine engine would be useful. In particular, a device, system, and/or method that removes heat from a gas turbine engine after engine shutdown would be desirable.

### BRIEF DESCRIPTION

Aspects and advantages of the invention will be set forth in part in the following description, or may be obvious from the description, or may be learned through practice of the invention.

In one exemplary embodiment of the present subject matter, a system is provided. The system comprises a cooling apparatus, including a suction device for forcing air through a gas turbine engine, and a support apparatus. The cooling apparatus is disposed on the support apparatus. The support apparatus is moveable with respect to the gas turbine engine to position the cooling apparatus in contact with an exhaust of the gas turbine engine.

In another exemplary embodiment of the present subject matter, a post-shutdown heat removal system for a gas turbine engine is provided. The post-shutdown heat removal system comprises a support apparatus and a nozzle in operative communication with a suction device for forcing air through the gas turbine engine. The nozzle and the suction device are disposed on the support apparatus. The support apparatus comprises a lift device for adjusting a height of the nozzle along a vertical direction, an angle adjustment mechanism for adjusting an angle of the nozzle with respect to a horizontal direction, and a nozzle support element disposed on a longitudinal slide rail for adjusting a longitudinal position of the nozzle. The support apparatus is configured to translate laterally and longitudinally with respect to the gas turbine engine to position the cooling apparatus in contact with an exhaust of the gas turbine engine.

In a further exemplary embodiment of the present subject matter, a method of removing heat from a gas turbine engine after shutdown is provided. The method comprises positioning a cooling apparatus adjacent an exhaust of the gas turbine engine, the cooling apparatus comprising a suction device; sealing the cooling apparatus to the exhaust; and operating the suction device to move air through the gas turbine engine.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides a schematic cross-section view of an exemplary gas turbine engine according to various embodiments of the present subject matter.
FIG. 2 provides a side view of a portion of an aircraft having the gas turbine engine of FIG. 1, according to an exemplary embodiment of the present subject matter.
FIG. 3 provides a perspective view of a system for removing heat from the gas turbine engine, according to an exemplary embodiment of the present subject matter.
FIG. 4 provides a perspective view of the system of FIG. 3 coupled to the aircraft gas turbine engine of FIG. 2.
FIG. 5 provides a cross-section view of a portion of an exhaust of the gas turbine engine and a nozzle of the system coupled to the exhaust, according to an exemplary embodiment of the present subject matter.
FIG. 6 provides a perspective view of a portion of the system of FIG. 3, including components for supporting the nozzle of the system and adjusting a longitudinal position of the nozzle, according to an exemplary embodiment of the present subject matter.
FIG. 7 provides a side view of a portion of the system of FIG. 3, including components for adjusting an angle of the nozzle of the system with respect to a horizontal direction, according to an exemplary embodiment of the present subject matter.
FIG. 8 provides a side view of a portion of the system of FIG. 3, including components for adjusting a height of the nozzle of the system, according to an exemplary embodiment of the present subject matter.
FIG. 9 provides a flow diagram of an exemplary method of removing heat from a gas turbine engine after shutdown of the gas turbine engine, according to an exemplary embodiment of the present subject matter.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first," "second," and "third" may be used interchangeably to distinguish one component from another and are not intended to signify location or importance of the individual components. The terms "forward" and "aft" refer to relative positions within a gas turbine engine or vehicle and refer to the normal operational attitude of the gas turbine engine or vehicle. For example, with regard to a gas turbine engine, forward refers to a position closer to an engine inlet and aft refers to a position closer to an engine nozzle or exhaust. The terms "upstream" and "downstream" refer to the relative direction with respect to fluid flow in a fluid pathway. For example, "upstream" refers to the direction from which the fluid flows, and "downstream" refers to the direction to which the fluid flows. The terms "coupled," "fixed," "attached to," and the like refer to both direct coupling, fixing, or attaching, as well as indirect coupling, fixing, or attaching through one or more intermediate components or features, unless otherwise specified herein. The singular forms "a," "an," and "the" include plural references unless the context clearly dictates otherwise.

Further, as used herein, the terms "axial" or "axially" refer to a dimension along a longitudinal axis of an engine. The term "forward" used in conjunction with "axial" or "axially" refers to a direction toward the engine inlet, or a component being relatively closer to the engine inlet as compared to another component. The term "aft" or "rear" used in conjunction with "axial" or "axially" refers to a direction toward the engine exhaust, or a component being relatively closer to the engine exhaust as compared to another component. The terms "radial" or "radially" refer to a dimension extending between a center longitudinal axis (or centerline) of the engine and an outer engine circumference. Radially inward is toward the longitudinal axis and radially outward is away from the longitudinal axis.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value, or the precision of the methods or machines for constructing or manufacturing the components and/or systems. The approximating language may refer to being within a +/- 1, 2, 4, 10, 15, or 20 percent margin in either individual values, range(s) of values, and/or endpoints defining range(s) of values.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present subject matter is directed to systems and methods for removing heat, e.g., from a gas turbine engine after engine shutdown. When a gas turbine engine remains at an elevated temperature for an extended period of time following engine shutdown, soakback coking can occur, which can reduce the effectiveness and/or life of components. Further, a lengthy post-shutdown cool down period can extend inspection and/or maintenance times, as the engine must cool to a temperature safe for inspection and/or maintenance. Additionally, thermal gradients can cause undesirable behaviors on the next engine start. The present subject matter provides one or more embodiments that address one or more of these challenges, as well as other challenges posed by relatively hot gas turbine engines after engine shutdown.

More particularly, the present subject matter is directed to a system comprising a cooling apparatus disposed on a support apparatus that maneuvers the cooling apparatus into position with respect to an exhaust of the gas turbine engine such that a nozzle of the cooling apparatus may interface with the exhaust. In exemplary embodiments, while the nozzle is fluidly sealed to the exhaust, a suction device of the cooling apparatus forces a flow of air through the engine to cool the engine. The cooling apparatus and the support apparatus are separate from the engine and are moved into position to remove engine heat following engine shutdown. Thus, the present subject matter provides ground support equipment that is capable of forcing air through the engine flow path, e.g., to enable engine cleaning, decreased fuel or oil system coking, and rapid inspection following engine shutdown. Such advantages of the present subject matter may be particularly useful with respect to aeronautical gas turbine engines, e.g., to help return the associated aircraft to service as quickly as possible while also minimizing engine fouling and other disadvantages of extended engine cooldown periods.

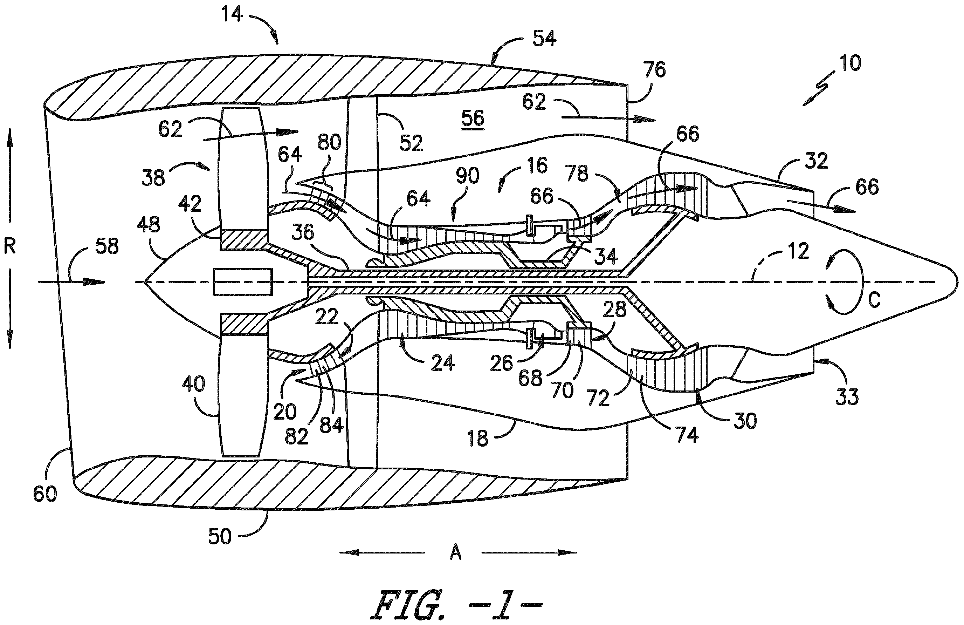

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference), a circumferential direction C (extending about the longitudinal centerline 12 and the axial direction A), and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the depicted embodiment, fan section 14 includes a fan 38 having a plurality of fan blades 40 coupled to a disk or hub 42 in a spaced apart manner. As depicted, fan blades 40 extend outward from disk 42 generally along the radial direction R. The fan blades 40 and disk 42 are together rotatable about the longitudinal centerline 12 by LP shaft 36. In some embodiments, a power gear box having a plurality of gears may be included for stepping down the rotational speed of the LP shaft 36 to a more efficient rotational fan speed.

Referring still to the exemplary embodiment of FIG. 1, the disk 42 is covered by a rotatable front nacelle 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that fan case (nacelle) 50 may be configured to be supported relative to the core turbine engine 16 by a plurality of circumferentially-spaced outlet guide vanes 52. Moreover, a downstream section 54 of the fan case 50 may extend over an outer portion of the core turbine engine 16 so as to define a bypass airflow passage 56 therebetween.

During operation of the turbofan engine 10, a volume of air 58 enters turbofan 10 through an associated inlet 60 of the fan case 50 and/or fan section 14. As the volume of air 58 passes across fan blades 40, a first portion of the air 58 as indicated by arrows 62 is directed or routed into the bypass airflow passage 56 and a second portion of the air 58 as indicated by arrows 64 is directed or routed into the LP compressor 22. The ratio between the first portion of air 62 and the second portion of air 64 is commonly known as a bypass ratio. The pressure of the second portion of air 64 is then increased as it is routed through the compressor section and into the combustion section 26, where it is mixed with fuel and burned to provide combustion gases 66. More particularly, the compressor section includes the LP compressor 22 and the HP compressor 24 that each may comprise a plurality of compressor stages 80, with each stage 80 including both an annular array or circumferential row of stationary compressor vanes 82 (also referred to as compressor stator vanes 82) and an annular array or circumferential row of rotating compressor blades 84 (also referred to as compressor rotor blades 84) positioned immediately downstream of the compressor vanes 82. The plurality of compressor blades 84 in the LP compressor 22 are coupled to the LP shaft or spool 36, and the plurality of compressor blades in the HP compressor 24 are coupled to the HP shaft or spool 34. The plurality of compressor vanes 82 in the LP compressor 22 are coupled to a compressor casing, and the plurality of compressor vanes 82 in the HP compressor 24 are coupled to a compressor casing; at least a portion of the HP compressor vanes 82 are coupled to compressor casing 90. In some embodiments, the compressor casing 90 may extend through both the LP compressor 22 and the HP compressor 24 and support all of the compressor vanes 82. In other embodiments, the compressor casing 90 supports only a portion of the compressor vanes 82 and may support only a portion of the compressor vanes 82 in the HP compressor 24. As previously described, as the second portion of air 64 passes through the sequential stages of compressor vanes 82 and blades 84, the volume of air 64 is pressurized, i.e., the pressure of the air 64 is increased prior to combustion with fuel in the combustion section 26 to form the combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

Although the gas turbine engine of FIG. 1 is depicted in a turboshaft configuration, it will be appreciated that the teachings of the present disclosure can apply to other types of turbine engines, turbomachines more generally, and other shaft systems. For example, the turbine engine may be another suitable type of gas turbine engine, such as e.g., a turboprop, turbojet, turbofan, aeroderivatives, etc. The present disclosure may also apply to other types of turbomachinery, such as e.g., steam turbine engines.

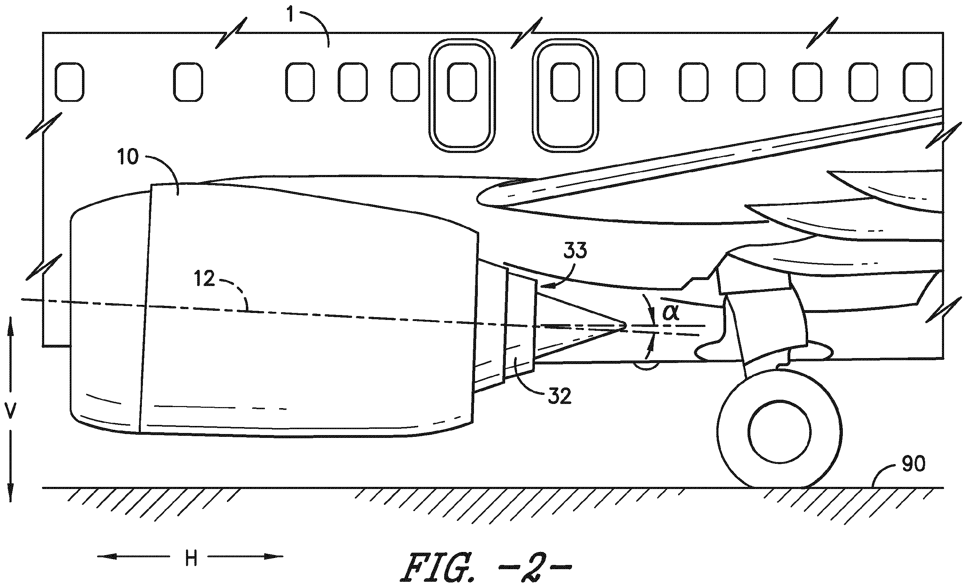

FIG. 2 provides a side view of an aircraft 1 comprising the turbofan jet engine 10 of FIG. 1, according to various exemplary embodiments of the present subject matter. As described above, the engine 10 comprises a jet exhaust nozzle section 32, which may be referred to herein as engine exhaust 32, that defines an outlet for the air 64 that entered the core turbine engine 16 via the inlet 20 and was combusted with fuel in the combustion section 26 to produce combustion gases 66. It will be appreciated that, as a result of the combustion gases 66 flowing therethrough, at least the hot gas path 78 of the core turbine engine 16 reaches relatively high temperatures during operation of the engine 10. For at least some turbofan jet engines 10, the engine temperatures may be within a range of about 200°F to about 3500°F, with the temperature varying in different sections of the engine 10. After the engine 10 is shutdown, e.g., upon landing of the aircraft 1, the temperature of engine components, such as the hot gas path 78 and components therein, can remain elevated for several hours unless the heat is removed from the engine 10. That is, without a mechanism to remove heat from the engine 10 after it is shutdown, it may take several hours for the engine 10 to cool down to a temperature conducive to cleaning, inspection, and/or maintenance of the engine 10. In addition to extending the time required to complete cleaning, inspection, and/or maintenance activities, such lengthy post-shutdown cool-down periods increase the potential for soakback coking of engine components, such as fuel nozzles, which can degrade the components and, thus, degrade component life and engine performance.

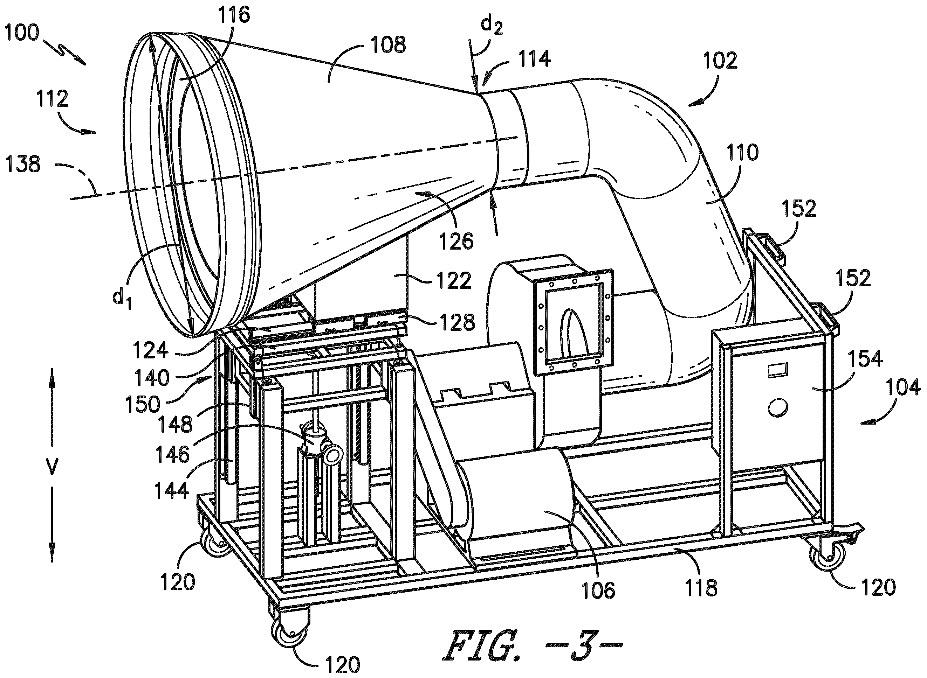

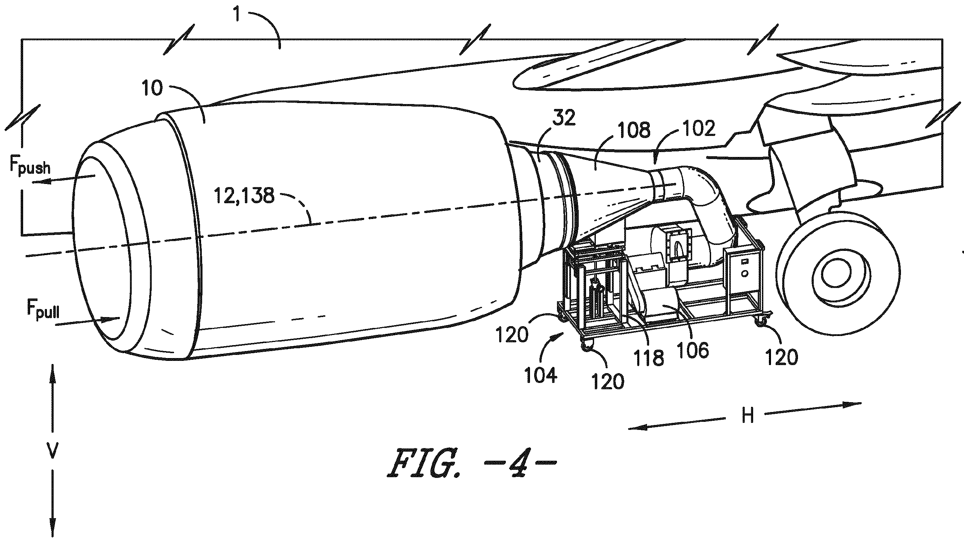

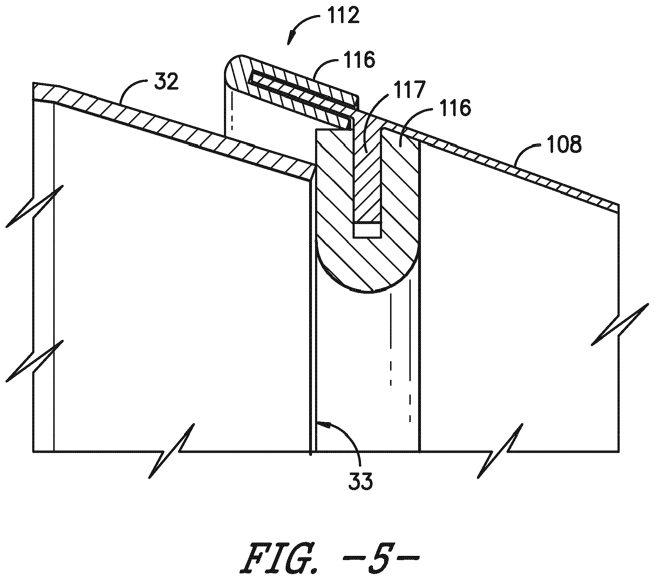

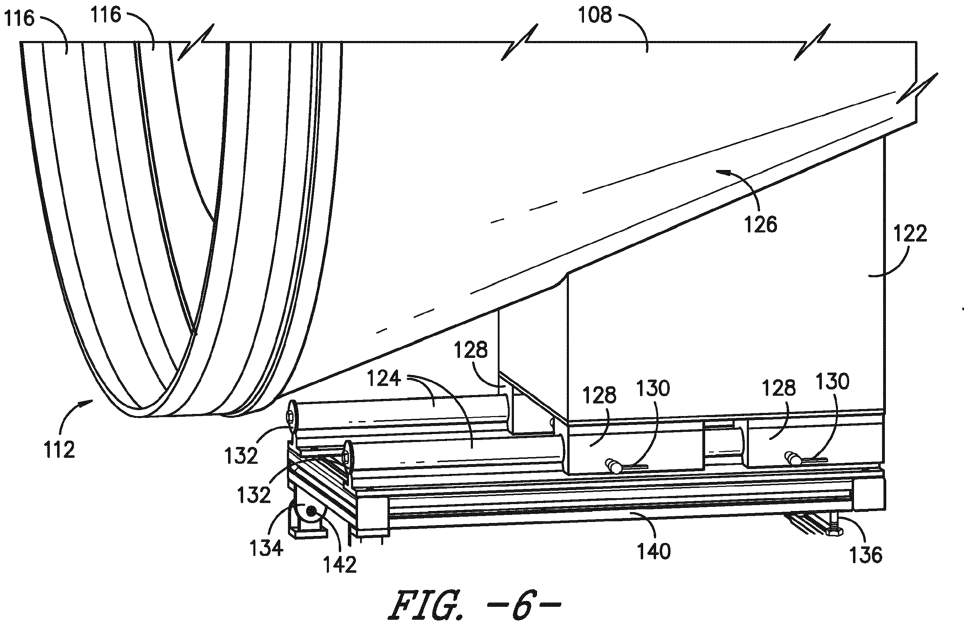

FIG. 3 provides a perspective view of an exemplary system 100 comprising a cooling apparatus 102 and a support apparatus 104, which may be used to cool the engine 10 of the aircraft 1 after engine shutdown. The system 100 may be referred to as a post-shutdown heat removal system. FIG. 4 provides a side view of the system 100 in position with respect to the engine 10 to cool or remove heat from the engine 10. FIG. 5 provides a perspective cross-section view of the cooling apparatus 102 positioned against the engine exhaust 32. FIGS. 6-8 provide close-up views of various components of the support apparatus of FIG. 3.

As illustrated in the figures, the cooling apparatus 102 of the system 100 includes a suction device 106 for forcing air through the engine 10, a nozzle 108 for fluidly coupling the cooling apparatus 102 to the engine 10, and a duct 110 extending from the nozzle 108 to the suction device 106 to fluidly couple the nozzle 108 and the suction device 106. More particularly, the nozzle 108 includes a first end 112 having a first diameter di and a second end 114 having a second diameter d₂ that is smaller than the first diameter di. As depicted in FIG. 4, the first end 112 is positioned over an end 33 (FIGS. 1, 2, 5) of the engine exhaust 32. In exemplary embodiments, the nozzle 108 has a frustoconical shape that tapers from the first end 112 to the second end 114. The duct 110 is disposed at the second end 114 to place the nozzle 108 in operative communication with the suction device 106. It will be appreciated that, because the engine exhaust 32 is at an elevated temperature when the nozzle 108 is positioned over the exhaust 32, at least the nozzle 108 may be formed from a material capable of withstanding relatively high temperatures, such as polytetrafluoroethylene (PTFE), graphite fiber, fiberglass, carbon fiber, silicone foam, and silicone rubber. Other components of the system 100, such as the duct 110, also may be formed from such materials to protect the components from the relatively high exhaust temperatures following engine shutdown.

As shown in FIGS. 3 and 5, the nozzle 108 may include a sealing mechanism 116, such as a silicone sealing strip, for sealing the cooling apparatus 102 to the engine exhaust 32 and thereby fluidly coupling the cooling apparatus 102 and the engine exhaust 32. Referring particularly to FIG. 5, the nozzle 108 may include a projection 117 extending radially inward at a location longitudinally offset from the first end 112 of the nozzle 108. As illustrated in FIG. 5, the sealing mechanism 116 may wrap around the projection 117, providing a surface against which the end 33 of the engine exhaust 32 may be positioned and sealed. Further, a second sealing mechanism 116 may wrap around the first end 112 of the nozzle 108 and may also help fluidly seal the nozzle 108 to the engine exhaust 32. It will be appreciated that the sealing mechanisms 116 may further protect the engine 10 from damage caused by placing the nozzle 108 in contact with the engine exhaust 32. In addition, the sealing mechanisms 116 may help provide a seal between the nozzle 108 and engine exhaust 32 when either the nozzle 108 or the exhaust 32 or both the nozzle 108 and exhaust 32 have an irregular shape or are not shaped such that a substantially fluid tight seal would be achieved when the nozzle 108 contacts the exhaust 32 without a sealing mechanism 116 therebetween. That is, either or both of the sealing mechanisms 116 help mitigate any irregularities or imperfections that would otherwise hamper the nozzle 108 from fluidly sealing to the engine exhaust 32.

The suction device 106 forcibly draws or pushes air through the engine 10. That is, the suction device 106 initiates a flow of air through the nozzle 108, which is fluidly connected to the suction device 106 via the duct 110, and through the engine exhaust 32, to which the nozzle 108 is sealed. As shown in FIG. 1, a fluid flow path is defined through the engine 10 from the inlet 60 (which receives the flow of air 58), through the inlet 20 of the core gas turbine engine 16 (which receives the second portion of air 64), through the LP and HP compressors 20, 22, through the combustion section 26, along the hot gas path 78 (which includes the HP and LP turbines 28, 30) and through the engine exhaust 32. Thus, with the nozzle 108 sealed to the engine exhaust 32 as shown in FIG. 4, a flow of air F may be pushed (Fₚᵤₛₕ) or pulled (Fₚᵤₗₗ) through the engine 10 using the suction device 106. The flow of air F initiated by the suction device 106 helps cool the engine 10, e.g., through convection as the cooler air (which may be at or near an ambient temperature) passes over and around the relatively hotter engine components. It will be appreciated that the form of the suction device 106 may include, but is not limited to, a fan, a blower, a vacuum, or other similar device. In exemplary embodiments, the suction device 106 may provide an air flow of about 500 SCFM (standard cubic feet per minute) to about 2000 SCFM, and more particularly, the suction device 106 may provide an air flow of about 700 SCFM to about 1500 SCFM.

As shown in FIG. 3, the cooling apparatus 102 is disposed on the support apparatus 104, which is separate from the engine 10 and is moveable with respect to the engine 10 to position the cooling apparatus 102 in contact with the engine exhaust 32. In exemplary embodiments, the support apparatus 104 may be a rolling cart that carries the components of the cooling apparatus 102 and comprises various features for aligning the nozzle 108 of the cooling apparatus 102 with the engine exhaust 32. More particularly, as illustrated in the exemplary embodiment of FIG. 3, the suction device 106, nozzle 108, and duct 110 are all disposed on the support apparatus 104. The support apparatus 104 comprises a frame 118 that supports the suction device 106, nozzle 108, and duct 110. The frame 118 is disposed on a plurality of wheels 120 for adjusting a position of the cooling apparatus 102 with respect to the engine exhaust 32. That is, the support apparatus 104 is configured to translate laterally and longitudinally with respect to the engine 10 to position the cooling apparatus 102 in contact with the engine exhaust 32. In embodiments comprising the plurality of wheels 120, the wheels 120 are disposed on or touching the horizontal support surface or ground 90 to allow the support apparatus 104 to translate with respect to the engine 10.

Keeping with FIG. 3, the support apparatus 104 further comprises a nozzle support element 122 on which the nozzle 108 is disposed and a longitudinal slide rail 124 on which the nozzle support element 122 is disposed. FIG. 6 provides a close-up perspective view of the nozzle support element 122 and the longitudinal slide device including the longitudinal slide rail 124. As illustrated in FIGS. 3 and 6, the nozzle support element 122 may be shaped complementary to an outer surface 126 of the nozzle 108. For example, for embodiments in which the nozzle 108 has a frustoconical shape and the outer surface 126 curves to define a frustoconical shape, the nozzle support element 122 curves complementarily to receive the curved nozzle 108. However, the nozzle support element 122 may have any suitable shape or configuration for receiving the nozzle 108 to support the nozzle 108.

The longitudinal slide rail 124 allows adjustment of a longitudinal position of the nozzle support element 122. More particularly, in the exemplary embodiment depicted in FIGS. 3 and 6, the support apparatus comprises two longitudinal slide rails 124, on which slide elements 128 are received. As shown, the nozzle support element 122 is disposed on the slide elements 128, i.e., the slide elements 128 support the nozzle support element 122 on the longitudinal slide rails 124 and allow the nozzle support element 122 to move longitudinally with respect to the engine 10. That is, the slide elements 128 slide or otherwise move along the longitudinal slide rails 124, which extend longitudinally or along a longitudinal axis of the support apparatus 104 as shown in FIG. 3, such that the nozzle support element 122 disposed on the slide elements 128 moves longitudinally with respect to the support apparatus 104 and the engine 10, when the support apparatus 104 is longitudinally aligned with the engine 10. It will be appreciated that the nozzle support element 122 may be attached or coupled to the slide elements 128, and any suitable attachment means, such as bolts, glue, welding, etc., may be used to secure the nozzle support element 122 to the slide elements 128.

As illustrated in FIGS. 3 and 6, each slide element 128 may comprise an adjustment handle 130 in operative communication with a clamp, stop, or the like that is selectively actuated to hold the slide element 128 in position. More specifically, in a first position of the adjustment handle 130, the respective slide element 128 may be free to move along the longitudinal slide rail 124 on which the slide element 128 is disposed, and in a second position of the adjustment handle 130, the slide element 128 is prevented or stopped from moving along the longitudinal slide rail 124. As such, by controlling the engagement of the clamp, stop, etc. with the longitudinal slide rail 124, the adjustment handle 130 allows selective adjustment of the position of the respective slide element 128 along the longitudinal slide rail 124. Further, a limit block 132 may be disposed at each end of the longitudinal slide rail 124 to limit longitudinal movement of the slide elements 128, e.g., to ensure the slide elements 128 do not slide off the respective rail 124.

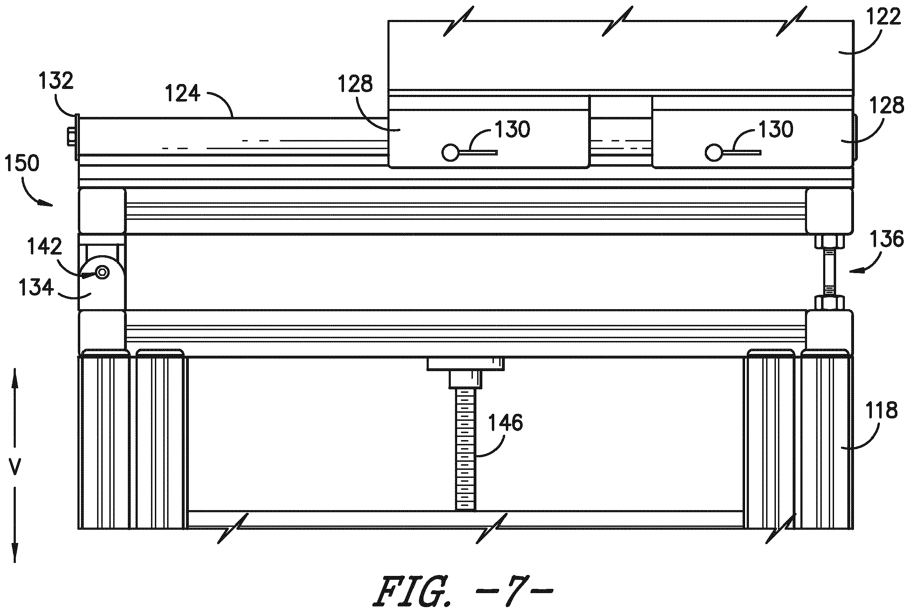

As illustrated in FIG. 2, in some embodiments, the engine 10 may be at an angle α with respect to a support surface 90, e.g., the ground, extending generally along a horizontal direction H. That is, the engine 10 may be tilted with respect to the horizontal direction H. As such, in exemplary embodiments such as depicted in FIG. 7, the support apparatus 104 comprises a hinge 134 operatively coupled to an angle adjustment mechanism 136 to adjust the position of the nozzle 108 to accommodate the tilt of the engine 10. More particularly, the nozzle 108 comprises a longitudinal centerline 138 (FIG. 4), and the angle adjustment mechanism 136 is configured to adjust an angle of the nozzle longitudinal centerline 138 with respect to the horizontal direction H such that the nozzle longitudinal centerline 138 may be aligned with the longitudinal centerline 12 of the engine 10. That is, an angle adjustment portion 140 of the frame 118 is supported at one end by the hinge 134 and at the other end by the angle adjustment mechanism 136, which lifts or lowers the angle adjustment portion 140 such that the angle adjustment portion 140 pivots about a hinge point 142 of the hinge 134. The hinge 134, angle adjustment mechanism 136, and angle adjustment portion 140 of the frame 118 are disposed immediately below the longitudinal slide rails 124 that support the nozzle support element 122. As shown in FIG. 7, the angle adjustment components are positioned below the nozzle support element 122 along a vertical direction V, and the longitudinal slide rails 124 are attached or coupled to the angle adjustment portion 140. As such, when the angle adjustment mechanism 136 is raised or lowered along the vertical direction V, angle adjustment portion 140 is reoriented with respect to the horizontal direction H, which changes the orientation of the nozzle support element 122 and the nozzle 108 supported thereon with respect to the horizontal direction H. Accordingly, using the angle adjustment mechanism 136, the nozzle 108 may be positioned such that its longitudinal centerline 138 is at the angle α to match the angle of the engine 10 and its longitudinal centerline 12 with respect to the horizontal direction H.

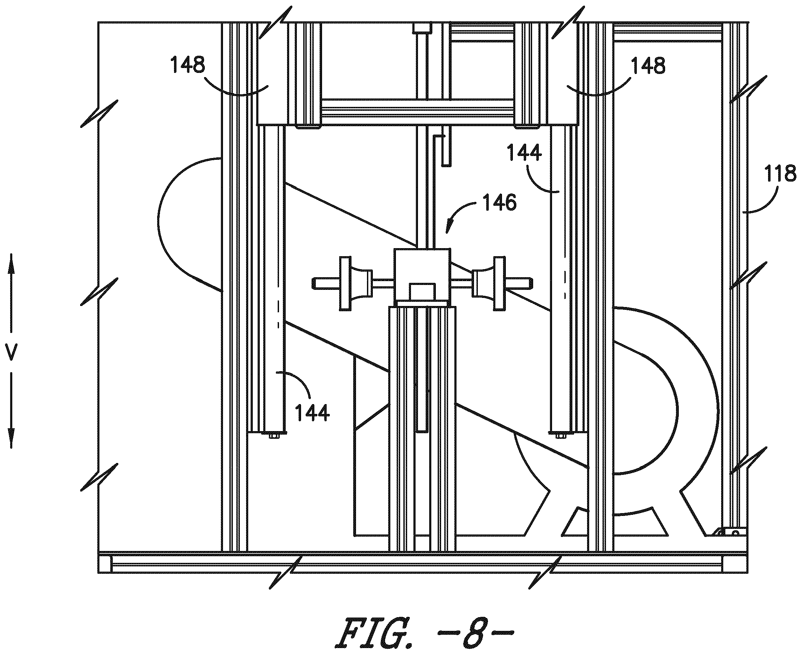

Referring now to FIGS. 3 and 8, in exemplary embodiments, the support apparatus 104 also comprises a vertical slide rail 144 for adjusting a height of the cooling apparatus 102 with respect to the engine exhaust 32. More specifically, the support apparatus 104 comprises a lift device 146 operatively coupled to the vertical slide rail 144 to adjust the height of the cooling apparatus, which may be measured along the vertical direction V with respect to the support surface 90 and/or a reference point on the engine 10. The lift device 146 may be any suitable mechanism for adjusting or changing the location of the nozzle 108 along the vertical direction. The form of the lift device 146 includes, but is not limited to, a hand-operated lift, such as a hydraulic jack or a lead screw device manually operated by a user of the system 100, or an automated or automatic lift, such as a hydraulic jack or a lead screw device actuated by a controller or the like.

In the embodiment depicted in FIGS. 3 and 8, the lift device 146 is operatively coupled to four slide elements 148 that are each received on a respective one of four vertical slide rails 144. An adjustment section 150 is operatively coupled to the slide elements 148. The adjustment section 150 may include a portion of the frame 118 to which is directly or indirectly attached or coupled the nozzle support element 122, longitudinal slide rails 124, longitudinal slide elements 128, adjustment handles 130, limit blocks 132, hinge 134, angle adjustment mechanism 136, and angle adjustment portion 140. The lift device translates along the vertical direction V to move the adjustment section 150, and the components supported thereon, along the vertical direction V through the movement of the slide elements 148 to which the adjustment section 150 is coupled along the vertical slide rails 144. As such, the vertical position of the nozzle 108, which is supported by the adjustment section 150 of the support apparatus 104, may be selectively adjusted to align the nozzle 108 with the engine exhaust 32.

As further illustrated in FIG. 3, the support apparatus 104 comprises at least one handle 152 on the frame 118 for a user to position the cooling apparatus 102 with respect to the engine exhaust 32. More particularly, as previously described, a plurality of wheels 120 may be attached to the frame 118 such that the support apparatus 104 may move or roll along the support surface 90. In the depicted exemplary embodiment, the frame 118 comprises a pair of handles 152 (i.e., two handles 152) to provide a user with a suitable location for the user to grip the support apparatus 104 to roll the cooling apparatus 102, which is supported on the support apparatus 104, adjacent to the exhaust 32 of the engine 10. As described above, the support apparatus 104 may include one or more features for adjusting the position of the nozzle 108 to more precisely align the nozzle 108 with the engine exhaust 32 once the support apparatus 104 has been maneuvered to approximately align the nozzle 108 with the engine exhaust 32.

Keeping with FIG. 3, the support apparatus 104 may also comprise an electrical cabinet 154 through which may run any electrical connections for the various components of the cooling apparatus 102 and the support apparatus 104. For instance, an electrical connection may extend from the electrical cabinet 154 to the suction device 106 for powering or to provide power to the suction device 106. Other electrical connections may also extend from the electrical cabinet 154.

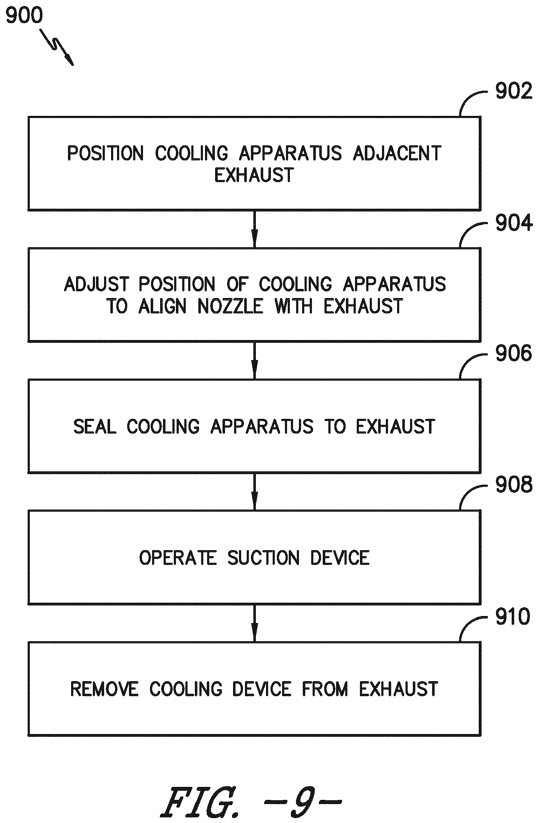

The present subject matter also provides methods of removing heat from or of cooling a gas turbine engine such as engine 10 after shutdown of the engine. FIG. 9 illustrates an exemplary method 900 of removing heat from the engine 10 post-shutdown. As shown at block 902 in FIG. 9, the method 900 comprises positioning a cooling apparatus 102 adjacent an exhaust 32 of a gas turbine engine 10. The cooling apparatus 102 comprises a suction device 106. As described herein, the cooling apparatus 102 with its suction device 106 may be disposed on a support apparatus 104 that is separate from the engine 10. The support apparatus 104 is moveable with respect to the engine 10, e.g., using a plurality of wheels 120 secured to a frame 118 of the support apparatus 104, to maneuver the cooling apparatus 102 adjacent the exhaust 32.

As illustrated at block 904 of FIG. 9, the method 900 further comprises adjusting the position of the cooling apparatus 102 to align a nozzle 108 of the cooling apparatus 102 with the engine exhaust 32. As described herein, the support apparatus 104 supporting the cooling apparatus 102 may include a variety of features for adjusting the height, angle, and/or longitudinal or axial position of the nozzle 108, which interfaces with the engine exhaust 32 to facilitate a flow of air F through the engine 10 to cool the engine 10. For instance, the height of the nozzle 108 may be adjusted along the vertical direction V using a lift device 146 that is in operative communication with the nozzle 108 via a plurality of vertical slide rails 144, a plurality of vertical slide elements 148, and an adjustment section 150 of the frame 118. As another example, the angle of the nozzle 108 (more particularly, the angle of the longitudinal centerline 138 of the nozzle 108) with respect to the horizontal direction H may be adjusted using an angle adjustment mechanism 136 and a hinge 134, which are in operative communication with the nozzle 108 via an angle adjustment portion 140 of the frame 118, a plurality of longitudinal slide rails 124, a plurality of longitudinal slide elements 128, and a nozzle support element 122. Further, the longitudinal or axial position of the nozzle 108 with respect to the engine 10 may be adjusted using the plurality of longitudinal slide rails 124, the plurality of longitudinal slide elements 128, and the nozzle support element 122.

Referring to block 906 of FIG. 9, the method 900 also comprises sealing the cooling apparatus 102 to the engine exhaust 32. As described herein, a sealing mechanism 116, such as a silicone sealing strip, may be used to fluidly seal the cooling apparatus 102 to the engine exhaust 32 once the nozzle 108 contacts the engine exhaust 32. As illustrated at block 908, the method 900 further comprises operating the suction device 106 to move air through the engine 10. In some embodiments, the suction device 106 may be operated until a temperature T of the engine 10 is below a threshold temperature Tₜₕᵣₑₛ. For instance, one or more thermocouples positioned throughout the engine 10 may provide temperature readings to a user interface or to a controller, and a user or the controller may monitor the temperature readings and deactivate the suction device 106 once the temperature T provided by each thermocouple is below the threshold temperature Tthres. In other embodiments, the suction device 106 may be operated for a predetermined period of time t, which may be determined through testing, modeling, etc. The predetermined period of time t for operating the suction device 106 may be the same each operational cycle of the suction device 106, or the predetermined period of time t may be selected from a table or other collection of predetermined periods of time t based on the size of the engine 10, the environment in which engine 10 was operated (e.g., considering environmental conditions such as weather and the like), the time engine 10 was operated (e.g., from take-off to shutdown), etc., or any combination of such parameters.

Further, at block 910 of FIG. 9, the method 900 includes removing the cooling system 102 from the engine exhaust 32. For instance, the support apparatus 104 may be rolled away from (e.g., in a longitudinal direction opposite from) the engine 10 to unseal the nozzle 108 from the engine exhaust 32 and move the cooling system 102 away from the engine 10. In some embodiments, removing the cooling system 102 from the engine exhaust 32 also may comprise adjusting the height, angle, and/or longitudinal or axial position of the nozzle 108 using the various height, angle, and longitudinal position adjustment means described herein.

Accordingly, the present subject matter is directed to systems and methods for removing heat, e.g., from a gas turbine engine after engine shutdown. More particularly, the present subject matter is directed to a system and method of forced convection through an engine flowpath to remove heat from the engine. Forcing air through the flowpath to remove heat helps prevent shutdown soakback coking, e.g., of fuel nozzle components, helps render the engine safe for inspection and/or maintenance in a shorter amount of time following shutdown, and helps promote the distribution of cleaning fluid injected into the engine. Further, thermal gradients can be reduced, which can prevent bowed rotor starts and/or other undesirable behaviors at engine start. Accordingly, engine component durability and life may be extended, and time and cost savings may be realized from the cooling systems and methods described herein.

Moreover, as described herein, the present subject matter describes a heat removal system that is separate from the gas turbine engine and, thus, may be maneuvered into position to cool the engine following shutdown. In exemplary embodiments, the heat removal system seals to the engine exhaust prior to initiating forced convection through the engine. In contrast, known gas turbine engine cooling systems generally are installed as part of the engine and/or inject a cooling fluid (e.g., compressor bleed air) upstream of the turbine section of the engine. Thus, the present subject matter provides advantageous engine cooling to one of the warmer portions of the engine without increasing the engine envelope or complexity. Other benefits and advantages of the present subject matter may be realized as well.

Further aspects of the invention are provided by the subject matter of the following clauses:
1. A system comprising a cooling apparatus including a suction device for forcing air through a gas turbine engine; and a support apparatus, the cooling apparatus disposed on the support apparatus, wherein the support apparatus is moveable with respect to the gas turbine engine to position the cooling apparatus in contact with an exhaust of the gas turbine engine.
2. The system of any preceding clause, wherein the cooling apparatus comprises a sealing mechanism for sealing the cooling apparatus to the exhaust.
3. The system of any preceding clause, wherein the sealing mechanism is a silicone sealing strip.
4. The system of any preceding clause, wherein the cooling apparatus comprises a nozzle having a frustoconical shape that tapers from a first end having a first diameter to a second end having a second diameter that is smaller than the first diameter, and wherein the first end of the nozzle is positioned over an end of the exhaust.
5. The system of any preceding clause, wherein the cooling apparatus comprises a duct extending from the nozzle to the suction device to fluidly couple the nozzle and the suction device.
6. The system of any preceding clause, wherein the support apparatus comprises a nozzle support element on which the nozzle is disposed, and wherein the nozzle support element is disposed on a longitudinal slide rail to adjust an axial position of the nozzle support element.
7. The system of any preceding clause, wherein the support apparatus comprises a hinge operatively coupled to an angle adjustment mechanism, wherein the nozzle comprises an axial centerline, wherein the nozzle is in contact with the support apparatus, and wherein the angle adjustment mechanism is configured to adjust an angle of the axial centerline of the nozzle with respect to a horizontal direction.
8. The system of any preceding clause, wherein the support apparatus comprises a vertical slide rail for adjusting a height of the cooling apparatus with respect to the exhaust.
9. The system of any preceding clause, wherein the support apparatus comprises a lift device operatively coupled to the vertical slide rail to adjust the height of the cooling apparatus.
10. The system of any preceding clause, wherein the support apparatus comprises a frame disposed on a plurality of wheels for adjusting a position of the cooling apparatus with respect to the exhaust.
11. The system of any preceding clause, wherein the support apparatus comprises a handle on the frame for a user to position the cooling apparatus with respect to the exhaust.
12. The system of any preceding clause, wherein the support apparatus comprises an electrical cabinet, an electrical connection extending from the electrical cabinet to the suction device for powering the suction device.
13. The system of any preceding clause, wherein the suction device is a fan.
14. The system of any preceding clause, wherein the suction device provides an air flow of at least about 500 SCFM (standard cubic feet per minute).
15. The system of any preceding clause, wherein the suction device provides an air flow within a range of about 700 SCFM to about 1500 SCFM.
16. A post-shutdown heat removal system for a gas turbine engine comprising a nozzle in operative communication with a suction device for forcing air through the gas turbine engine; and a support apparatus, the nozzle and the suction device disposed on the support apparatus, the support apparatus comprising a lift device for adjusting a height of the nozzle along a vertical direction, an angle adjustment mechanism for adjusting an angle of the nozzle with respect to a horizontal direction, and a nozzle support element disposed on a longitudinal slide rail for adjusting a longitudinal position of the nozzle, wherein the support apparatus is configured to translate laterally and longitudinally with respect to the gas turbine engine to position the cooling apparatus in contact with an exhaust of the gas turbine engine.
17. The post-shutdown heat removal system of any preceding clause, wherein the lift device is in operative communication with the nozzle support element to adjust the height of the nozzle.
18. The post-shutdown heat removal system of any preceding clause, wherein the angle adjustment mechanism is in operative communication with the nozzle support element to adjust the angle of the nozzle.
19. The post-shutdown heat removal system of any preceding clause, wherein the lift device is disposed vertically below the longitudinal slide rail and the angle adjustment mechanism.
20. A method of removing heat from a gas turbine engine after shutdown, the method comprising positioning a cooling apparatus adjacent an exhaust of the gas turbine engine, the cooling apparatus comprising a suction device; sealing the cooling apparatus to the exhaust; and operating the suction device to move air through the gas turbine engine.
21. The method of any preceding clause, wherein the cooling apparatus including the suction device is disposed on a support apparatus that is separate from the gas turbine engine.
22. The method of any preceding clause, wherein the support apparatus is moveable with respect to the gas turbine engine using a plurality of wheels secured to a frame of the support apparatus.
23. The method of any preceding clause, further comprising adjusting a position of the cooling apparatus to align a nozzle of the cooling apparatus with the exhaust.
24. The method of any preceding clause, wherein the support apparatus supporting the cooling apparatus includes features for adjusting a height, an angle, and an axial position of the nozzle.
25. The method of any preceding clause, wherein sealing the cooling apparatus to the exhaust comprises positioning the nozzle in contact with the exhaust.
26. The method of any preceding clause, wherein the nozzle comprises a sealing mechanism for sealing the cooling apparatus to the exhaust when the nozzle contacts the exhaust.
27. The method of any preceding clause, wherein operating the suction device comprises operating the suction device until a temperature T of the gas turbine engine is below a threshold temperature Tthres.
28. The method of any preceding clause, wherein the gas turbine engine comprises one or more thermocouples for providing the temperature T to a user interface or to a controller.
29. The method of any preceding clause, further comprising monitoring the temperature T and deactivating the suction device once the temperature T is below the threshold temperature Tₜₕᵣₑₛ.
30. The method of any preceding clause, wherein operating the suction device comprises operating the suction device for a predetermined period of time t.
31. The method of any preceding clause, wherein the predetermined period of time t is based on the size of the gas turbine engine, the operating environment in which the gas turbine engine, the operating time of the gas turbine engine, or any combination thereof.
32. The method of any preceding clause, further comprising removing the cooling system from the exhaust.
33. The method of any preceding clause, wherein removing the cooling system from the exhaust comprises rolling the support apparatus away from the gas turbine engine to unseal the nozzle from the exhaust and move the cooling system away from the gas turbine engine.
34. The method of any preceding clause, wherein removing the cooling system from the exhaust comprises adjusting at least one of the height, the angle, and the axial position of the nozzle.

This written description uses examples to disclose the invention, including the best mode, and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they include structural elements that do not differ from the literal language of the claims or if they include equivalent structural elements with insubstantial differences from the literal language of the claims.

## Claims

1. A system, comprising:
a cooling apparatus including a suction device for forcing air through a gas turbine engine; and
a support apparatus, the cooling apparatus disposed on the support apparatus,
wherein the support apparatus is moveable with respect to the gas turbine engine to position the cooling apparatus in contact with an exhaust of the gas turbine engine.

2. The system of claim 1, wherein the cooling apparatus comprises a sealing mechanism for sealing the cooling apparatus to the exhaust.

3. The system of claim 1 or 2, wherein the cooling apparatus comprises a nozzle having a frustoconical shape that tapers from a first end having a first diameter to a second end having a second diameter that is smaller than the first diameter, and wherein the first end of the nozzle is positioned over an end of the exhaust.

4. The system of claim 3, wherein the cooling apparatus comprises a duct extending from the nozzle to the suction device to fluidly couple the nozzle and the suction device.

5. The system of claim 3 or 4, wherein the support apparatus comprises a nozzle support element on which the nozzle is disposed, and wherein the nozzle support element is disposed on a longitudinal slide rail to adjust an axial position of the nozzle support element.

6. The system of any of claims 3 to 5, wherein the support apparatus comprises a hinge operatively coupled to an angle adjustment mechanism, wherein the nozzle comprises an axial centerline, wherein the nozzle is in contact with the support apparatus, and wherein the angle adjustment mechanism is configured to adjust an angle of the axial centerline of the nozzle with respect to a horizontal direction.

7. The system of any of claims 1 to 6, wherein the support apparatus comprises a vertical slide rail for adjusting a height of the cooling apparatus with respect to the exhaust.

8. The system of any of claims 1 to 7, wherein the support apparatus comprises a frame disposed on a plurality of wheels for adjusting a position of the cooling apparatus with respect to the exhaust.

9. The system of any of claims 1 to 8, wherein the support apparatus comprises an electrical cabinet, an electrical connection extending from the electrical cabinet to the suction device for powering the suction device.

10. The system of any of claims 1 to 9, wherein the suction device is a fan.

11. A post-shutdown heat removal system for a gas turbine engine, comprising:
a nozzle in operative communication with a suction device for forcing air through the gas turbine engine; and
a support apparatus, the nozzle and the suction device disposed on the support apparatus, the support apparatus comprising
a lift device for adjusting a height of the nozzle along a vertical direction,
an angle adjustment mechanism for adjusting an angle of the nozzle with respect to a horizontal direction, and
a nozzle support element disposed on a longitudinal slide rail for adjusting a longitudinal position of the nozzle,
wherein the support apparatus is configured to translate laterally and longitudinally with respect to the gas turbine engine to position the cooling apparatus in contact with an exhaust of the gas turbine engine.

12. The post-shutdown heat removal system of claim 11, wherein the lift device is in operative communication with the nozzle support element to adjust the height of the nozzle.

13. The post-shutdown heat removal system of claim 11 or 12, wherein the angle adjustment mechanism is in operative communication with the nozzle support element to adjust the angle of the nozzle.

14. The post-shutdown heat removal system of any of claims 11 to 13, wherein the lift device is disposed vertically below the longitudinal slide rail and the angle adjustment mechanism.

15. A method of removing heat from a gas turbine engine after shutdown, the method comprising:
positioning a cooling apparatus adjacent an exhaust of the gas turbine engine, the cooling apparatus comprising a suction device;
sealing the cooling apparatus to the exhaust; and
operating the suction device to move air through the gas turbine engine.
